# EUROPÄISCHE PATENTSCHRIFT

(11) **EP 1 394 453 B1**
(45) Veröffentlichungstag und Bekanntmachung des Hinweises auf die Patenterteilung: **05.11.2008**
(21) Anmeldenummer: 03017596.2
(22) Anmeldetag: 08.08.2003
(51) Int. Cl.: F16K 1/22, F02D 9/10

(54) **Ventilklappe und Verfahren zur Herstellung einer Ventilklappe**
Butterfly valve and method of manufacturing a butterfly valve
Vanne papillon et procédé de fabrication d'une vanne papillon

(30) Priorität: 28.08.2002 DE 10240594
(43) Veröffentlichungstag der Anmeldung: 03.03.2004
(73) Patentinhaber: MAHLE International GmbH, 70376 Stuttgart (DE)
(72) Erfinder: Kocian, Frank, 48165 Münster (DE); Reifegerste, Karsten, 71120 Grafenau (DE); Plevnik, Vid, 71272 Renningen-Malmsheim (DE)
(74) Vertreter: Bernhard, Uwe

(56) Entgegenhaltungen:
- EP-A- 1 083 316
- EP-A- 1 201 895
- DE-A- 4 445 100
- DE-A- 19 508 355
- JP-A- 2000 210 984
- US-A- 4 943 404
- US-A- 6 119 652

## Beschreibung

Die Erfindung betrifft eine Ventilklappe zur Anordnung in einer Fluidführung, umfassend ein Lagerteil zur beweglichen Lagerung der Ventilklappe und mindestens ein Flügelteil.

Derartige Ventilklappen werden beispielsweise im Zusammenhang mit Lufttaktventilen eingesetzt. Mittels solcher Lufttaktventile lassen sich Ladungswechselvorgänge bei Hubkolbenmotoren optimieren. Über ein Lufttaktventil, welches in einem Saugrohr eines Hubkolbenmotors als Fluidführung angeordnet ist, läßt es sich erreichen, daß in jedem Saughub der Ansaugquerschnitt sehr schnell verschließbar und wieder freigebbar ist. Dadurch läßt sich bei entsprechender Steuerung des Lufttaktventils über den gesamten Drehzahlbereich des Hubkolbenmotors eine erhebliche Drehmomentsteigerung erreichen, die vor allem auch bei geringen Motordrehzahlen wirksam ist. Darüber hinaus können auch zahlreiche weitere Zusatzeffekte realisiert werden. In dem Artikel "Impulsaufladung und Laststeuerung von Hubkolbenmotoren durch ein Lufttaktventil" von A. Elsässer et al. in MTZ 12/2001, Seiten 998 - 1009 ist die Funktion solcher Lufttaktventile beschrieben.

Aus der DE 195 08 355 A1 ist ein Drosselklappenstutzen mit einer in einem Gehäuse schwenkbar angeordneten Drosselklappe bekannt, wobei der zur Anlage an das Gehäuse des Drosselklappenstutzens gelangende radial umlaufende Randbereich der Drosselklappe aus einem zusammen mit dem Werkstoff des Gehäuses einen niedrigen Reibkoeffizienten aufweisenden Material besteht.

Aus der JP 2000-210984 A ist ein Drosselventil und ein Spritzgußverfahren zur Herstellung des Drosselventils bekannt.

Davon ausgehend liegt der Erfindung die Aufgabe zugrunde, eine Ventilklappe der eingangs genannten Art bereitzustellen, welche eine hohe Stabilität aufweist und dabei auf einfache Weise herstellbar ist.

Diese Aufgabe wird bei der eingangs genannten Ventilklappe erfindungsgemäß dadurch gelöst, dass das mindestens eine Flügelteil aus einem faserverstärkten Kunststoffmaterial mit zumindest schichtweise unidirektionaler Faserrichtung hergestellt ist, dass das Lagerteil mindestens eine Aufnahme aufweist, in welcher das zugeordnete Flügelteil mit dem Lagerteil verbunden sitzt, und dass das wenigstens eine Flügelteil aus mehreren Schichten aufgebaut ist.

Durch die Herstellung eines Flügelteils aus einem faserverstärkten Kunststoffmaterial mit unidirektionaler Faserrichtung lässt sich ein Flügelteil herstellen, welches eine große Biegesteifigkeit aufweist. Dadurch lässt sich eine hohe Dichtigkeit bezüglich der Sperrwirkung einer entsprechend hergestellten Ventilklappe erreichen. Ein solches Flügelteil ist dabei aus mehreren Schichten aufgebaut, wobei in jeder Schicht die Faserrichtung dann unidirektional ist (die Faserrichtungen in verschiedenen Schichten können auch unterschiedlich sein).

Dadurch, dass das Lagerteil mindestens eine Aufnahme aufweist, in welcher das zugeordnete Flügelteil mit dem Lagerteil verbunden sitzt, lassen sich die Flügelteile als getrennte Bauteile und insbesondere als getrennte Platten herstellen und dann nach ihrer Endherstellung mit dem Lagerteil verbinden und insbesondere verkleben, wobei sie sich in die zugeordnete Aufnahme des Lagerteils einlegen oder einstecken lassen. Dadurch wird der Herstellungsprozess für die Faserlegung vereinfacht, da dann das mindestens eine Flügelteil unabhängig von dem Lagerteil herstellbar ist und entsprechend die Faserrichtung optimierbar ist. Das Lagerteil selber kann aus einem metallischen Werkstoff hergestellt sein oder selber aus einem faserverstärkten Kunststoffmaterial hergestellt sein. Es kann einstückig oder mehrstückig ausgebildet sein.

Dadurch, dass das mindestens eine Flügelteil einen Schichtaufbau aufweist, können verschiedene Schichten mit unidirektionaler Faserorientierung bereitgestellt werden, wobei über ein entsprechendes Fasergelege für die der Fluidströmung ausgesetzte Fläche des Flügelteils eine hohe Flächenbiegesteifigkeit erreicht ist.

Durch die erfindungsgemäße Lösung lässt sich eine Ventilklappe mit verringerter Masse und damit verringertem Massenträgheitsmoment realisieren. Dadurch wiederum lassen sich schnellschaltende Ventile realisieren.

Insbesondere vorteilhaft ist es, wenn das Kunststoffmaterial zur Herstellung des mindestens einen Flügelteils langfasernverstärkt oder mit Endlosfasern verstärkt ist. Es lässt sich dann eine hohe Biegesteifigkeit für das entsprechend hergestellte Flügelteil erreichen. Langfasern sind dabei solche Fasern, deren Länge an der Größe des herzustellenden Bauteils orientiert sind und insbesondere in textilem Halbzeug angeordnet sind. Ein Material, welches Kurzfasern umfasst, eignet sich zur spritztechnischen Verarbeitung, d.h. die Faserlänge ist nicht so lang, dass eine Spritzung nicht mehr möglich ist. Unter Kurzfasern werden üblicherweise Fasern mit einer Länge bis 3 mm verstanden. Als Endlosfasern werden Fasern bezeichnet, die in der Form von Rovings oder Geweben verarbeitet werden und deren Länge konstruktionsbedingt ist oder durch die geometrische Abmessung des Bauteils bedingt ist. Langfasern haben in der Regel Faserlängen zwischen 3 mm und 50 mm.

Ganz besonders vorteilhaft ist es, wenn das Kunststoffmaterial eine Matrix aus einem thermoplastischen Werkstoff aufweist. Vorzugsweise werden thermoplastische Werkstoffe mit hoher Klebefähigkeit eingesetzt, so dass sich ein fertig hergestelltes Flügelteil mit dem Lagerteil verkleben lässt, wobei dann das Flügelteil in der zugeordneten Aufnahme am Lagerteil sitzt. Auf diese Weise wiederum lässt sich die Herstellung vereinfachen, da eben eine nachträgliche Verbindung zwischen Lagerteil und Flügelteil möglich ist. Bei dem Matrixmaterial für den faserverstärkten Kunststoff kann es sich beispielsweise um PEEK, PEK oder PEI handeln.

Insbesondere ist es vorgesehen, dass Fasern in dem mindestens einen Flügelteil quer und insbesondere im wesentlichen senkrecht zu einer Drehachse der Ventilklappe orientiert sind. Dadurch liegen zumindest Schichten vor, in welchen die Langfasern quer zur Drehachse und dabei im wesentlichen in einer Längsrichtung des entsprechenden Flügelteils orientiert sind. Dadurch ergibt sich eine hohe Biegesteifigkeit insbesondere bezogen auf Hauptrichtungen der Fluidführung. Es kann dabei auch vorgesehen sein, dass bei einem Laminataufbau Fasern schichtweise quer zur Drehachse und mit parallelem Richtungsanteil zur Drehachse orientiert sind, um bezogen auf die Fläche des entsprechenden Flügelteils, welche dem Fluid zugewandt ist, eine hohe Biegesteifigkeit zu erreichen und die Herstellung zu erleichtern. Beispielsweise können Schichten vorgesehen sein, in denen die Fasern in Winkeln von +/- 80° zu der Drehachse und quer zur Längsrichtung orientiert sind. Über Querfasern zur Längsrichtung lassen sich Impulsstoßkräfte, die beim Anschlagen eines Flügelteils an ein Anschlagelement (welches zur Definition einer Sperrstellung dient) entstehen, besser ableiten.

Insbesondere ist es vorgesehen, dass sich Schichten in der Faserorientierung unterscheiden, um so auch Impulsstoßkräfte auffangen zu können.

Weiterhin ist es günstig, wenn das mindestens eine Flügelteil eine solche Gestalt hat, daß es eine erhöhte Steifigkeit bezogen auf eine Oberfläche, auf welche Druck ausgeübt wird, aufweist. Es kann vorgesehen sein, daß in einer Sperrstellung die Ventilklappe an ein Anlageelement angelegt ist. Das Flügelteil muß dann eine solche Biegesteifigkeit aufweisen, daß keine Undichtigkeiten entstehen, wenn das Fluid an der Ventilklappe ansteht und dadurch Druck kräfte auf die Flügelteile ausgeübt werden.

Eine erhöhte Steifigkeit über die geometrische Gestalt des Flügelteils läßt sich erreichen, wenn dieses eine ondulierte Form hat, indem entsprechende Oberflächen eine periodische Struktur aufweisen. Dies läßt sich beispielsweise dadurch erreichen, daß Sicken eingeprägt werden. Eine andere Möglichkeit besteht darin, daß dem Flügelteil eine waschbrettartige Gestalt gegeben wird.

Ganz besonders vorteilhaft ist es, wenn die Aufnahme, welche einem Flügelteil zugeordnet ist, so ausgebildet ist, daß dieses mit dem Lagerteil verklebbar und/oder verschweißbar ist. Insbesondere ist dann die Aufnahme an die Gestalt des Flügelteils mindestens in dem Bereich, in dem eine Verbindung erfolgt, angepaßt.

Ganz besonders vorteilhaft ist es, wenn das mindestens eine Flügelteil mit dem Lagerteil verklebt und/oder verschweißt ist. Eine solche Verklebung bzw. Verschweißung läßt sich auf einfache Weise beispielsweise durch Erhitzung herstellen, wenn das entsprechende Flügelteil in seine Aufnahme am Lagerteil eingelegt ist.

Bei einer Variante einer Ausführungsform ist es vorgesehen, daß zwischen Lagerteil und dem mindestens einen Flügelteil eine Klebefolie angeordnet ist.

Diese Klebefolie ist vorzugsweise aus einem thermoplastischen Material hergestellt. In Zusammenwirkung mit der thermoplastischen Matrix eines Flügelteils läßt sich dann bei Erhitzung eine feste und haltbare Verklebung zwischen Lagerteil und Flügelteil erreichen. Insbesondere ist es vorgesehen, daß der Schmelzpunkt der Klebefolie unterhalb von dem des Flügelteils liegt.

Weiterhin ist es günstig, wenn das mindestens eine Flügelteil von dem Lagerteil umgriffen ist. Dadurch wird eine große Klebefläche zur Verbindung des Flügelteils mit dem Lagerteil bereitgestellt. Darüber hinaus kann ein Teil der Kräfte, welche auf das Flügelteil wirken, über das Lagerteil abgeleitet werden. Das Flügelteil sitzt in der Aufnahme.

Insbesondere ist dabei eine einem Flügelteil zugeordnete Aufnahme am Lagerteil so ausgebildet, daß das Flügelteil in diese steckbar oder legbar ist, um so eine gute Verbindung zwischen Lagerteil und Flügelteil zu erhalten.

Die erfindungsgemäße Ventilklappe läßt sich auf einfache und kostengünstige Weise herstellen, wenn das Flügelteil ein von dem Lagerteil getrenntes Bauteil ist, welches mit dem Lagerteil verbunden ist. Dadurch lassen sich Lagerteil und Flügelteil insbesondere bezüglich ihrer mechanischen Belastung optimiert getrennt herstellen und anschließend verbinden. Das Flügelteil oder die Flügelteile und das Lagerteil können dann unabhängig von dem anderen Teil optimiert werden.

Grundsätzlich ist es möglich, daß das Lagerteil einstückig ausgebildet ist. Bei einer Variante einer Ausführungsform ist das Lagerteil mindestens zweiteilig ausgebildet. Dadurch läßt sich insbesondere die Klebeverbindung auf einfache Weise herstellen.

Insbesondere umfaßt eine Aufnahme am Lagerteil einen ersten Aufnahmebereich, welcher an einem ersten Lagerteilelement gebildet ist, und einen zweiten Aufnahmebereich, welcher an einem zweiten Lagerteilelement gebildet ist. Dadurch ist es möglich, ein Flügelelement zuerst beispielsweise in den Aufnahmebereich des ersten Lagerteilelements einzulegen und darauf dann das zweite Lagerteilelement aufzusetzen, wobei dann das Flügelteil auch in dem zweiten Aufnahmebereich liegt und damit in der Aufnahme sitzt. Es lassen sich dann beispielsweise leichter Klebefolien an den jeweiligen Aufnahmebereichen anbringen, da diese leichter zugänglich sind.

Bei einer Variante einer Ausführungsform weist das mindestens eine Flügelteil im Bereich der Verbindung mit dem Lagerteil eine im wesentlichen ebene Oberfläche auf. Bei entsprechender Anpassung der Oberfläche des Lagerteils kann dann auf einfache Weise eine sichere Klebeverbindung zwischen Lagerteil und Flügelteil hergestellt werden.

Es kann vorgesehen sein, daß das Lagerteil aus einem metallischen Werkstoff wie beispielsweise Titan hergestellt ist. Ein solches Lagerteil läßt sich beispielsweise einstückig oder zweiteilig auf einfache Weise herstellen.

Es kann auch vorgesehen sein, daß das Lagerteil aus einem Kunststoffmaterial und insbesondere Faserverbundwerkstoff mit Kurzfasern hergestellt ist. Dadurch kann die Masse der Ventilklappe weiter reduziert werden, so daß sich schnell schaltende Ventile realisieren lassen. Insbesondere ist das Lagerteil dann zweiteilig ausgebildet, wobei die beiden Lagerteilelemente aus einem Faserverbundwerkstoff mit einem Langfaser-Anteil oder Endlosfaser-Anteil hergestellt werden können.

Es läßt sich dann ein Fasergelege so auslegen, insbesondere mit unidirektionalen Prepreg-Tapes, daß eine optimale Kraftableitung erreicht ist und so eine hohe Stabilität und Festigkeit des Lagerteils erreicht ist. Wenn das Lagerteil aus einem Kunststoffmaterial hergestellt ist, ermöglicht die gegenüber einem metallischen Material reduzierte Steifigkeit eine bessere Krafteinleitung in die Welle.

Insbesondere hat dann das Lagerteil eine solche Gestalt, daß es mittels Tapelagen mit unidirektionalen Fasern verstärkbar ist.

Um eine sichere Verbindung der Ventilklappe mit einer Drehwelle zu erreichen, welche drehbar an der Fluidführung angeordnet ist, weist das Lagerteil vorteilhafterweise eine Verzahnung zur drehfesten Fixierung einer Drehwelle auf.

Es kann dabei vorgesehen sein, daß die Verzahnung durch Umspritzung eines Dorns hergestellt wird, insbesondere mittels eines kurzfaserverstärkten Kunststoffmaterials. Es kann dabei eine zumindest lokale Langfaserverstärkung integriert werden.

Es kann auch vorgesehen sein, daß die Verzahnung zumindest teilweise selbstschneidend beim Aufsetzen des Lagerteils auf die Welle hergestellt ist.

Grundsätzlich ist es auch möglich, daß die Welle drehfest in der Fluidführung angeordnet ist und die Ventilklappe drehbar auf der Welle sitzt.

Die Erfindung betrifft ferner ein Verfahren zur Herstellung einer Ventilklappe, welche ein Lagerteil und mindestens ein Flügelteil aufweist.

Der Erfindung liegt dabei die Aufgabe zugrunde, ein Verfahren zu schaffen, mittels welchem die Ventilklappe auf möglichst einfache Weise mit optimierten Eigenschaften herstellbar ist.

Diese Aufgabe wird bei dem genannten Verfahren erfindungsgemäß dadurch gelöst, dass das mindestens eine Flügelteil aus einem faserverstärkten Kunststoffmaterial hergestellt wird und nach Konsolidierung mit dem Lagerteil verbunden wird, dass die Fasern im Kunststoffmaterial mindestens schichtweise unidirektional ausgerichtet sind und dass das mindestens eine Flügelteil aus mehreren Schichten aufgebaut ist.

Bei der Verbindung kann das Lagerteil bereits hergestellt sein. Alternativ kann im Zusammenhang mit der Verbindung das Lagerteil hergestellt werden, beispielsweise durch Umspritzung. Die Vorteile des erfindungsgemäßen Verfahrens wurden bereits im Zusammenhang mit der erfindungsgemäßen Ventil klappe erläutert.

Weitere vorteilhafte Ausgestaltungen wurden ebenfalls bereits im Zusammenhang mit der erfindungsgemäßen Ventilklappe erläutert.

Insbesondere ist es vorteilhaft, wenn das mindestens eine Flügelteil mittels Tapes mit unidirektionaler Faserrichtung hergestellt wird. Dadurch lässt sich bei entsprechender Orientierung des Tapes bei der Legung von einzelnen Flügelteilschichten eine optimierte Biegesteifigkeit des fertig hergestellten Flügelteils erreichen.

Die nachfolgende Beschreibung eines bevorzugten Ausführungsbeispiels dient im Zusammenhang mit der Zeichnung der näheren Erläuterung der Erfindung.

Es zeigen:
- Figur 1: eine schematische Draufsicht auf eine Ventilklappe, welche in einer Fluidführung angeordnet ist (Antriebsmittel zur Verdrehung der Ventilklappe sind nicht gezeigt);
- Figur 2: eine vergrößerte Ansicht eines Lagerteils der Ventilklappe gemäß Figur 2 mit daran sitzenden Flügelteilen und
- Figur 3: eine Variante einer Ausführungsform eines Flügelteils in Seitenansicht.

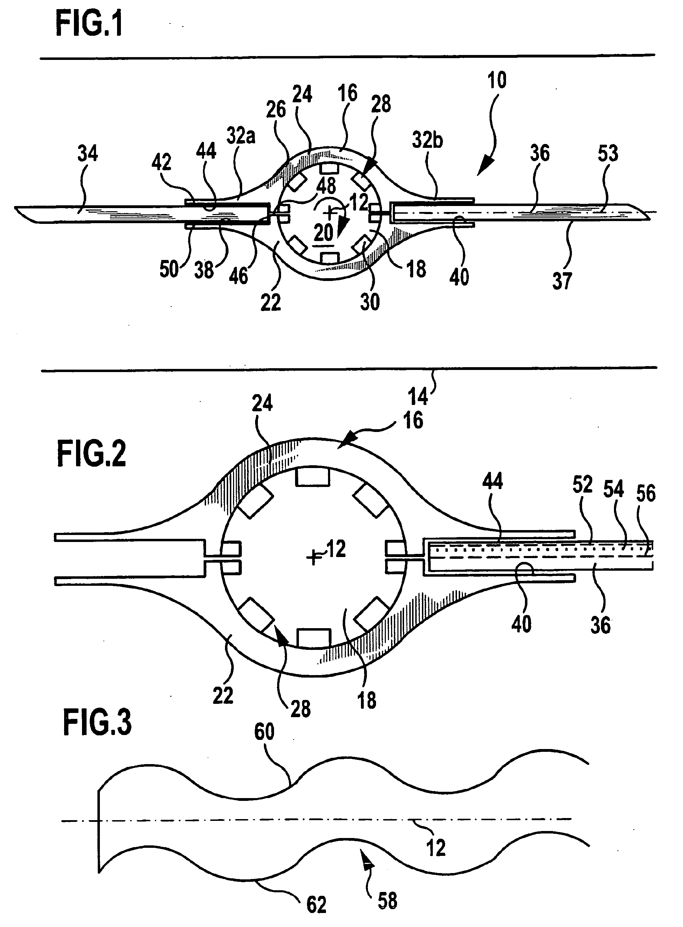

Eine Ventilklappe, von der ein Ausführungsbeispiel in Figur 1 als Ganzes mit 10 bezeichnet ist, ist drehbar um eine Drehachse 12 in einer Fluidführung 14 angeordnet.

Bei der Fluidführung 14 handelt es sich beispielsweise um ein Saugrohr eines Hubkolbenmotors. Mittels der Ventilklappe 10 ist dabei ein Zusatzventil, nämlich ein Lufttaktventil, gebildet, so daß sich in jedem Saughub der Ansaugquerschnitt der Fluidführung 14 sehr schnell verschließen läßt und diesen Ansaugquerschnitt auch wieder sehr schnell freigeben kann. Bei entsprechender Steuerung der Drehstellung der Ventilklappe 10 läßt sich dadurch über den gesamten Drehzahlbereich des Hubkolbenmotors eine erhebliche Drehmomentensteigerung erreichen, die insbesondere auch bei geringen Motordrehzahlen realisierbar ist. Es wird in diesem Zusammenhang auf den Artikel "Impulsaufladung und Laststeuerung von Hubkolbenmotoren durch ein Lufttaktventil" von A. Elsässer et al. in MTZ 12/2001, Seiten 998 - 1009 Bezug genommen.

Die Ventilklappe 10 umfaßt ein Lagerteil 16, über welches die Ventilklappe 10 um die Drehachse 12 drehbar in der Fluidführung 14 gelagert ist. Beispielsweise ist das Lagerteil 16 als Wellenaufnahme mit einer Aufnahmeöffnung 18 ausgebildet, über welche das Lagerteil 16 auf eine drehbar in der Fluidführung 14 angeordnete Welle 20 aufsetzbar ist. Die Aufnahmeöffnung 18 und die Welle 20 sind so aneinander angepaßt ausgebildet, daß das Lagerteil 16 drehfest an der Welle 20 fixierbar ist, so daß bei Drehung dieser Welle 20 die Ventilklappe 10 mitgedreht wird.

Es kann aber auch vorgesehen sein, daß eine Welle drehfest in der Fluidführung 14 angeordnet ist und die Ventilklappe 10 mit ihrem entsprechenden Lagerteil drehbar um diese Welle angeordnet ist.

Zum Antrieb der Ventilklappe 10 in ihrer Drehbewegung (Schwenkbewegung) in der Fluidführung 14 sind Antriebsmittel vorgesehen (in der Zeichnung nicht gezeigt). Diese Antriebsmittel umfassen einen Aktuator zur Betätigung der Schwenkbewegung. Beispielsweise sind dazu Magnete vorgesehen, welche elektrisch ansteuerbar sind, um so eine Drehbewegung der Ventilklappe 10 aus einer Sperrstellung heraus oder in eine Sperrstellung zu ermöglichen.

Bei dem in Figur 1 gezeigten Ausführungsbeispiel ist das Lagerteil 16 zweiteilig ausgebildet mit einem ersten halbschalenförmigen Lagerteilelement 22 und einem zweiten halbschalenförmigen Lagerteilelement 24. Diese beiden Lagerteilelemente 22 und 24 sind im wesentlichen gleich ausgebildet. Sie umfassen jeweils einen Mittelbereich 26, welcher in etwa die Form eines Ringabschnitts hat, wobei, wenn die beiden Lagerteilelemente 22 und 24 zusammengesetzt sind, durch die zugeordneten Mittelbereiche 26 die Aufnahmeöffnung 18 gebildet ist. Diese Aufnahmeöffnung 18 ist dann (bis auf eine unten noch näher beschriebene Verzahnung) im wesentlichen kreisförmig, um die Welle 20 aufnehmen zu können.

Es kann dabei vorgesehen sein, daß im Bereich der Aufnahmeöffnung 18 eine Verzahnung 28 angeordnet ist, welche eine Mehrzahl von beabstandeten, in die Aufnahmeöffnung 18 ragende Stufenelemente 30 umfaßt, auf welche die Welle 20 mit entsprechenden Ausnehmungen aufschiebbar ist, um so eine drehfeste Fixierung des Lagerteils 16 auf der Welle 20 zu ermöglichen.

An den Mittelbereich 26 des Lagerteils 60 schließt sich zu beiden Seiten hin ein Endbereich 32a, 32b an, über den das Lagerteil eben mit einer ebenen Oberfläche parallel zur Drehachse 12 ausläuft.

Bei dem in Figur 1 gezeigten Ausführungsbeispiel umfaßt die Ventilklappe 10 ein erstes Flügelteil 34 und ein zweites Flügelteil 36, welche mit dem Lagerteil 16 verbunden und insbesondere verklebt bzw. verschweißt sind. Diese Flügelteile 34, 36 stellen die eigentlichen Fluidbarrieren dar, d. h. bei entsprechender Schwenkstellung der Ventilklappe 10 sperren die Flügelteile 34 und 36 den Fluidstrom durch die Fluidführung 14 hindurch und sind somit für den Ventileffekt verantwortlich. Entsprechende Oberflächen 37 der Flügelteile 34, 36 sind dann druckbelastet.

Zur Fixierung dieser Flügelteile 34, 36 umfaßt das Lagerteil 16 jeweils Aufnahmen 38, 40, in die jeweils das zugeordnete Flügelteil 34 bzw. 36 einsteckbar bzw. einlegbar sind.

Dazu ist in dem ersten Lagerteilelement 22 sowohl im Endbereich 32a als auch im Endbereich 32b eine Abstufung 42 gebildet, welche eine im wesentlichen ebene Wand 44 und eine quer dazu liegende ebene Wand 46 umfaßt. Eine weitere im wesentlichen ebene Wand 48, die parallel zur Wand 44 liegt, führt zu der Aufnahmeöffnung 18. Das zweite Lagerteilelement 24 weist dem ersten Lagerteilelement 22 zugewandt den gleichen Aufbau mit einer Abstufung 50 auf, wobei sich dann die Abstufungen 42 und 50 zu der ersten Aufnahme 38 ergänzen. Gleiches gilt für die Ausbildung der zweiten Aufnahme 40.

Die Aufnahmen 38 und 40 weisen dabei bei dem gezeigten Ausführungsbeispiel einen im wesentlichen rechteckigen Querschnitt auf, um so das zugeordnete Flügelteil 34 bzw. 36 aufnehmen zu können.

Bei dem gezeigten Ausführungsbeispiel sind die Lagerteilelemente 22 und 24 getrennt hergestellt und durch Zusammenfügen sind über die Abstufungen 42 und 50 die jeweiligen Aufnahmen 38 und 40 gebildet. Alternativ ist es auch möglich, daß das Lagerteil 16 einstückig ausgebildet ist, wobei entsprechende Aufnahmen 38, 40 an diesem einstückigen Lagerteil gebildet sind.

Das Lagerteil 16 ist beispielsweise aus einem metallischen Material wie Titan hergestellt.

Es kann aber auch aus einem faserverstärkten und insbesondere Kurzfaserverstärkten Kunststoff hergestellt sein. Hier ist es dann vorteilhaft, wenn eben das Lagerteil 16 zweiteilig ist, d. h. ein erstes Lagerteilelement 22 und ein zweites Lagerteilelement 24 umfaßt. Die Lagerteilelemente 22, 24 lassen sich dann beispielsweise durch Umspritzung eines Dorns herstellen. In die Lagerteilelemente 22, 24 lassen sich während der Herstellung auch Inserts mit unidirektionalen Langfasern oder Endlosfasern integrieren, um so einerseits eine Gewichtsminimierung und andererseits eine optimale Steifigkeit mit optimaler Kraftableitung zu erhalten. Diese Inserts werden dabei vorzugsweise in bezüglich der Wellenfixierung kraftkritischen Bereichen wie Außenkonturbereichen angeordnet.

Bei entsprechender Wahl der Gestalt des Lagerteils 16 und insbesondere dessen Zweiteilung in das Lagerteilelement 22 und das Lagerteilelement 24 läßt sich dabei eben erreichen, daß mittels Fasertapes zur Herstellung der Inserts das Lagerteil 16 herstellbar ist. Insbesondere ist die Gestalt derart, daß das Lagerteil 16 über unidirektionale Prepreg-Tapes insbesondere mit Langfasern oder Endlosfasern herstellbar ist.

Die Verzahnung 28 kann dabei auch aus einem kurzfaserverstärkten Werkstoff hergestellt sein.

Es ist auch möglich, die Verzahnung 28 beispielsweise durch Ausspritzung herzustellen.

Darüber hinaus ist es auch möglich, die Verzahnung 28 dadurch herzustellen, daß vor Aufsatz auf die Welle 20 keine Verzahnung oder eine unvollständige Verzahnung vorhanden ist, diese sich dann beim Aufsetzen auf die Welle 20 bei der Herstellung der Drehverbindung zwischen Ventilklappe 10 und der Welle 20 selber schneidet. Entsprechend muß dann an der Aufnahmeöffnung 18 ein Material angeordnet sein, welches das Selbstschneiden der Verzahnung 28 beim Aufsetzen auf die Welle 20 ermöglicht.

Das Lagerteil 16 kann, wenn es metallisch ist, Längsschlitze aufweisen, um dieses im Bereich der Fixierung mit der Welle 20 schubweicher zu machen und damit eine bessere Krafteinleitung von der Welle 20 in das Lagerteil 16 zu erhalten. Bei einem Lagerteil 16 aus einem Kunststoffmaterial kann die Verzahnung Ausnehmungen und sich parallel zur Richtung der Drehachse 12 verjüngende Zähne zur verbesserten Krafteinleitung aufweisen. Eine solche Verjüngung kann auch bei einem metallischen Lagerteil 16 vorgesehen sein. Der Querschnitt eines Zahns ist dabei dort am kleinsten, wo über den Antrieb ein Torsionsmoment auf das Lagerteil 16 eingeleitet wird.

Die beiden Flügelteile 34 und 36 sind getrennt von dem Lagerteil 16 hergestellt und werden mit diesem verbunden und insbesondere verklebt bzw. verschweißt. Die Flügelteile 34, 36 sind jeweils aus einem faserverstärkten Kunststoffmaterial hergestellt, wobei dieses faserverstärkte Kunststoffmaterial Langfasern oder Endlosfasern enthält, welche zumindest schichtweise unidirektional orientiert sind (Figur 2).

Bei dem in Figur 2 gezeigten Ausführungsbeispiel weisen die Flügelteile 34, 36 eine Mehrzahl von Schichten 52 auf, wobei in jeder Schicht die Langfasern oder Endlosfasern des faserverstärkten Kunststoffmaterials unidirektional orientiert sind. Die Orientierung dieser Fasern ist dabei im wesentlichen parallel zu der druckbelasteten Oberfläche 37 und beispielsweise quer und insbesondere im wesentlichen senkrecht zu der Drehachse 12 (die in den Figuren 1 und 2 senkrecht zur Zeichenebene steht). Beispielsweise sind die Fasern in mindestens einer Schicht 54 angeordnet, in welcher sie quer zur Drehachse 12 liegen und dabei mindestens im Bereich der Aufnahme 40 im wesentlichen parallel zur entsprechenden Wand 44 der Aufnahme liegen.

Es kann auch vorgesehen sein, daß mindestens eine weitere Schicht 56 vorhanden ist, in welcher die Fasern quer zur Orientierung der Fasern in der Schicht 54, beispielsweise in einem Winkel von ± 80° zu der Drehachse 12, liegen und quer zur Längsrichtung 53 liegen.

Vorzugsweise ist es vorgesehen, daß die Flügelteile 34 aus Schichten 52 mit alternierender Faserrichtung aufgebaut sind, wobei die Faserrichtung innerhalb einer Schicht 52 unidirektional ist. Dadurch erhält man eine hohe Flächenbiegesteifigkeit bezogen auf die Oberfläche 37 für die entsprechend hergestellten Flügelteile 34, 36.

Das faserverstärkte Kunststoffmaterial für die Flügelteile 34, 36 umfaßt eine thermoplastische Matrix, in die die unidirektionalen Fasern eingebettet sind. Bei diesem thermoplastischen Material handelt es sich beispielsweise um PEEK oder PEI; insgesamt sind dann die Flügelteile 34, 36 aus einem faserverstärkten thermoplastischen Werkstoff hergestellt.

Die Flügelteile 34 und 36 weisen solche Abmessungen auf, daß sie in einer bestimmten Drehstellung der Ventilklappe 10 die Fluidführung sperren, d. h. den Fluidstrom durch die Fluidführung 14 sperren.

Die beiden Flügelteile 34, 36 werden wie unten stehend noch beschrieben als getrennte Bauteile hergestellt und dann mit dem Lagerteil 16 verklebt bzw. verschweißt. Sie werden dazu in die zugeordneten Aufnahmen 38 und 40 gelegt bzw. gesteckt.

Die erfindungsgemäße Ventilklappe 10 wird wie folgt hergestellt:

Die beiden Flügelteile 34, 36 werden getrennt von dem Lagerteil 16 hergestellt. Dazu werden in einer Form Prepreg-Gelege mit unidirektionaler Faserrichtung mit Langfasern oder Endlosfasern gelegt, wobei Schichten eine Faserrichtung im wesentlichen parallel zur Oberfläche 37 (die durch die Form vorgegeben ist) aufweisen. Bei dem Matrixmaterial dieser Prepreg-Gelege handelt es sich um einen thermoplastischen Werkstoff, welcher eine große Klebefähigkeit aufweist. Das gelegte Halbzeug wird in der Form durch Erhitzung konsolidiert, um eine Platte herzustellen, wobei nach der Konsolidierung die Flügelteile 34, 36 aus der Platte geschnitten werden.

Unabhängig davon wird das Lagerteil 16 hergestellt, indem beispielsweise die beiden Lagerteile 22, 24 aus einem metallischen Material hergestellt werden oder aus einem faserverstärkten Kunststoffmaterial hergestellt werden. Es werden dabei die Abstufungen 42 und 50 ausgebildet.

Es wird dann in einem weiteren Schritt in einer Form eine Verklebung bzw. Verschweißung zwischen dem Lagerteil 12 und den Flügelteilen 34 und 36 durchgeführt. Es kann dabei vorgesehen sein, daß die beiden Lagerteilelemente 22, 24 bereits fertig hergestellt sind, insbesondere wenn sie aus Metall sind, oder daß während der Verklebung bzw. Verschweißung in der Form die Lagerteilelemente 22 und 24, wenn sie aus einem faserverstärkten Kunststoffmaterial sind, mithergestellt werden.

An der Abstufung 50 des ersten Lagerteilelements 22 wird eine Klebefolie angeordnet, auf welche dann das zugeordnete Flügelteil 34 bzw. 36 aufgelegt wird. An der Abstufung 42 des zweiten Lagerteilelements 24 wird ebenfalls eine Klebefolie angeordnet und dieses zweite Lagerteilelement 24 dann auf die Flügelteile 34 und 36 gelegt. Die beiden Flügelteile 34, 36 sitzen dann in ihren jeweiligen Aufnahmen 38, 40.

Daraufhin wird die Form geschlossen und ein Erhitzungsvorgang durchgeführt. Bei der Klebefolie handelt es sich beispielsweise um ein niedrigschmelzendes thermoplastisches Material. Die Erhitzung wird insbesondere so durchgeführt, daß eine Verklebung der Flügelteile 34, 36 mit dem Lagerteil 16 erfolgt, ohne daß die Flügelteile 34, 36 selber zu stark aufgeweicht werden. Vorzugsweise ist die Klebefolie aus einem thermoplastischen Material hergestellt, welches einen niedrigeren Schmelzpunkt aufweist als das thermoplastische Material für die Flügelteile 34, 36.

Wie bereits erwähnt, kann in diesem Schritt gegebenenfalls gleichzeitig eine Herstellung des Lagerteils 16 über Umspritzung erfolgen, wenn dieses aus einem faserverstärkten Kunststoffmaterial hergestellt ist.

Es kann anschließend noch eine Feinbearbeitung des Lagerteils 16 durchgeführt werden, um beispielsweise die Verzahnung 28 herzustellen. Bei einem metallischen Lagerteil 16 kann dies beispielsweise über Drahterosion erfolgen.

Durch die erfindungsgemäße Lösung erhält man eine Ventilklappe 10, welche aufgrund des faserverstärkten Kunststoffmaterials für die Flügelteile 34, 36 ein geringes Gewicht bei hoher Biegesteifigkeit aufweist. Dadurch läßt sich zum einen eine schnelle Schaltbarkeit eines zugeordneten Lufttaktventils realisieren, da die Trägheit minimiert ist, und zum anderen läßt sich eine hohe Dichtigkeit und auch Lebensdauer erreichen, da eben die Biegesteifigkeit optimiert ist.

Aufgrund der getrennten Herstellung der Flügelteile 34, 36 und des Lagerteils 16 läßt sich insgesamt eine schnelle und kostengünstige Herstellung der Ventilklappe 10 als Ganzes erreichen, da eben die Flügelteile 34, 36 als dünne Platten vor der Verbindung mit dem Lagerteil 16 konsolidiert werden und damit der Aufwand für die Herstellung der Faserverbundwerkstoffteile minimiert ist.

Aufgrund der Verwendung thermoplastischer Werkstoffe für die Flügelteile 34, 36, und zwar als Matrixmaterial, in welches Langfasern oder Endlosfasern mit unidirektionaler Ausrichtung eingebettet sind, läßt sich die gute Klebefähigkeit thermoplastischer Werkstoffe nutzen, um die Flügelteile 34, 36 mit dem Lagerteil 16 zu verbinden, d. h. zu verkleben bzw. zu verschweißen. Das Lagerteil 16 kann dabei aus einem metallischen Werkstoff wie Titan hergestellt sein oder selber aus einem faserverstärkten Kunststoff.

Das Lagerteil 16 kann selber auch aus einem faserverstärkten thermoplastischen Werkstoff hergestellt sein, wie beispielsweise faserverstärktem PEEK oder faserverstärktem PEI; der Schmelzpunkt des (Matrix-)Werkstoffs für das Lagerteil 16 ist dabei insbesondere niedriger als für den Matrixwerkstoff der Flügelteile 34, 36.

Bei dem in Figur 2 gezeigten Ausführungsbeispiel sind die Flügelteile 34, 36 in einem großen Bereich im wesentlichen eben ausgebildet. Solche Flügelteile 34, 36 lassen sich aus unidirektionalen Laminaten herstellen und dabei insbesondere über unidirektionale Prepreg-Tapes.

Es kann aber auch vorgesehen sein, daß, wie beispielhaft in Figur 3 gezeigt, ein Flügelteil 58 eine Gestalt hat, die bezüglich der Biegesteifigkeit optimiert ist; insbesondere hat ein solches Flügelteil 58 auf seiner dem Fluid ausgesetzten Oberfläche, d. h. der druckbelasteten Oberfläche, eine ondulierte Form längs der Drehachse 12, beispielsweise durch Einprägung von Sicken. Es kann auch vorgesehen sein, daß das entsprechende Flügelteil 58 durch Auslegung von Prepreg-Tapes in einer waschbrettförmigen Form hergestellt wird. Die Endform des Flügelteils 58 ist dann, wie beispielhaft in Figur 3 gezeigt, ebenfalls waschbrettförmig. Die Längsachse des Flügelteils 58 liegt dabei senkrecht zur Zeichenebene.

Bei einer solchen Form sind eine erste Oberfläche 60 und eine zweite Oberfläche 62 des entsprechenden Flügelteils 58 nicht eben, sondern weisen eine wellenartig sich periodisch wiederholende Struktur auf. Durch eine solche Struktur wird eben die Biegesteifigkeit erhöht.

Die Ventilklappe 10 funktioniert wie folgt:

Die fertig hergestellte Ventilklappe 10 wird auf die drehbare Welle 20 aufgesetzt bzw. die Ventilklappe 10 wird drehbar auf eine drehfeste Welle aufgesetzt. Im ersteren Falle erfolgt eine Fixierung der Ventilklappe 10 über das Lagerteil 16 an der Welle 20, beispielsweise durch Eingriff der Stufenelemente 30 entsprechende Ausnehmungen der Welle 20 oder durch Selbstschneiden der Verzahnung 28 beim Aufsetzen auf die Welle 30.

Über das Lagerteil 16 läßt sich die Ventilklappe 10 zu einer Drehbewegung (Schwenkbewegung) in der Fluidführung 14 antreiben, um so eben diese zu sperren bzw. freizugeben, je nach Schwenkstellung. Die Krafteinleitung zur Aktuierung der Schwenkbewegung erfolgt über das Lagerteil 16.

## Patentansprüche

1. Ventilklappe zur Anordnung in einer Fluidführung (14), umfassend ein Lagerteil (16) zur beweglichen Lagerung der Ventilklappe und mindestens ein Flügelteil (34; 36), wobei das mindestens eine Flügelteil (34; 36) aus einem faserverstärkten Kunststoffmaterial mit zumindest schichtweise unidirektionaler Faserrichtung hergestellt ist, wobei das Lagerteil (16) mindestens eine Aufnahme (38; 40) aufweist, in welcher das zugeordnete Flügelteil (34; 36) mit dem Lagerteil (16) verbunden sitzt, und wobei das mindestens eine Flügelteil (34; 36) aus mehreren Schichten aufgebaut ist.

2. Ventilklappe nach Anspruch 1,
**dadurch gekennzeichnet,**
**dass** das Kunststoffmaterial Langfasern verstärkt oder mit Endlosfasern verstärkt ist.

3. Ventilklappe nach Anspruch 1 oder 2,
**dadurch gekennzeichnet,**
**dass** das Kunststoffmaterial eine Matrix aus einem thermoplastischen Werkstoff aufweist.

4. Ventilklappe nach einem der vorangehenden Ansprüche,
**dadurch gekennzeichnet,**
**dass** Fasern in dem mindestens einen Flügelteil (34; 36) quer zu einer Drehachse (12) der Ventilklappe orientiert sind.

5. Ventilklappe nach einem der Ansprüche 1 bis 4,
**dadurch gekennzeichnet,**
**dass** sich beabstandete Schichten (54, 56) in der Faserorientierung unterscheiden.

6. Ventilklappe nach einem der vorangehenden Ansprüche,
**dadurch gekennzeichnet,**
**dass** das mindestens eine Flügelteil (58) eine solche Gestalt hat, dass es eine erhöhte Steifigkeit bezogen auf eine Oberfläche aufweist, auf welche Druck ausgeübt wird.

7. Ventilklappe nach Anspruch 6,
**dadurch gekennzeichnet, dass** das mindestens eine Flügelteil (58) eine ondulierte Form hat.

8. Ventilklappe nach einem der vorangehenden Ansprüche,
**dadurch gekennzeichnet,**
**dass** die Aufnahme (38; 40), welche einem Flügelteil (34; 36) zugeordnet ist, so ausgebildet ist, dass dieses mit dem Lagerteil (16) verklebbar und/oder verschweißbar ist.

9. Ventilklappe nach einem der vorangehenden Ansprüche,
**dadurch gekennzeichnet,**
**dass** das mindestens eine Flügelteil (34; 36) mit dem Lagerteil (16) verklebt und/oder verschweißt ist.

10. Ventilklappe nach Anspruch 9,
**dadurch gekennzeichnet,**
**dass** zwischen Lagerteil (16) und dem mindestens einen Flügelteil (34; 36) eine Klebefolie angeordnet ist.

11. Ventilklappe nach einem der vorangehenden Ansprüche,
**dadurch gekennzeichnet,**
**dass** das mindestens eine Flügelteil (34; 36) von dem Lagerteil (16) umgriffen ist.

12. Ventilklappe nach einem der vorangehenden Ansprüche,
**dadurch gekennzeichnet,**
**dass** eine einem Flügelteil (34; 36) zugeordnete Aufnahme (38; 40) am Lagerteil (16) so ausgebildet ist, dass das Flügelteil (34; 36) in diese steckbar oder legbar ist.

13. Ventilklappe nach einem der vorangehenden Ansprüche,
**dadurch gekennzeichnet,**
**dass** das mindestens eine Flügelteil (34; 36) ein von dem Lagerteil (16) getrenntes Bauteil ist, welches mit dem Lagerteil (16) verbunden ist.

14. Ventilklappe nach einem der vorangehenden Ansprüche,
**dadurch gekennzeichnet,**
**dass** das Lagerteil (16) mindestens zweiteilig ausgebildet ist.

15. Ventilklappe nach Anspruch 14,
**dadurch gekennzeichnet,**
**dass** eine Aufnahme (38; 40) am Lagerteil (16) einen ersten Aufnahmebereich umfasst, welcher an einem ersten Lagerteilelement (24) gebildet ist, und einen zweiten Aufnahmebereich umfasst, welcher an einem zweiten Lagerteilelement (22) gebildet ist.

16. Ventilklappe nach einem der vorangehenden Ansprüche,
**dadurch gekennzeichnet,**
**dass** das mindestens eine Flügelteil (34; 36) im Bereich der Verbindung mit dem Lagerteil (16) eine im wesentlichen ebene Oberfläche aufweist.

17. Ventilklappe nach einem der vorangehenden Ansprüche,
**dadurch gekennzeichnet,**
**dass** das Lagerteil (16) aus einem metallischen Werkstoff hergestellt ist.

18. Ventilklappe nach einem der Ansprüche 1 bis 16,
**dadurch gekennzeichnet,**
**dass** das Lagerteil (16) aus einem Kunststoffmaterial hergestellt ist.

19. Ventilklappe nach Anspruch 18,
**dadurch gekennzeichnet,**
**dass** das Lagerteil (16) Bereiche aus einem Langfaserverstärkten oder mit Endlosfasern verstärkten Kunststoffmaterial umfasst.

20. Ventilklappe nach einem der vorangehenden Ansprüche,
**dadurch gekennzeichnet,**
**dass** das Lagerteil (16) eine Verzahnung (28) zur drehfesten Fixierung einer Drehwelle (20) aufweist.

21. Ventilklappe nach Anspruch 20,
**dadurch gekennzeichnet,**
**dass** die Verzahnung (28) mittels kurzfaserverstärktem Kunststoffmaterial hergestellt ist.

22. Ventilklappe nach Anspruch 20 oder 21,
**dadurch gekennzeichnet,**
**dass** die Verzahnung (28) zumindest teilweise selbstschneidend bei Aufsatz des Lagerteils (16) auf die Drehwelle (20) hergestellt ist.

23. Verfahren zur Herstellung einer Ventilklappe, welche ein Lagerteil und mindestens ein Flügelteil aufweist, bei dem das mindestens eine Flügelteil aus einem faserverstärkten Kunststoffmaterial hergestellt wird und nach Konsolidierung mit dem Lagerteil verbunden wird, bei dem die Fasern im Kunststoffmaterial mindestens schichtweise unidirektional ausgerichtet sind und bei dem das mindestens eine Flügelteil (34; 36) aus mehreren Schichten aufgebaut ist.

24. Verfahren nach Anspruch 23,
**dadurch gekennzeichnet,**
**dass** das mindestens eine Flügelteil mittels Tapes mit unidirektionaler Faserrichtung hergestellt wird.

25. Verfahren nach Anspruch 23 oder 24,
**dadurch gekennzeichnet,**
**dass** faserverstärktes Kunststoffmaterial ein Langfaserverstärktes oder mit Endlosfasern verstärktes Kunststoffmaterial ist.

26. Verfahren nach einem der Ansprüche 23 bis 25,
**dadurch gekennzeichnet,**
**dass** das faserverstärkte Kunststoffmaterial eine Matrix aus einem thermoplastischen Material aufweist.

27. Verfahren nach einem der Ansprüche 23 bis 26,
**dadurch gekennzeichnet,**
**dass** das hergestellte mindestens eine Flügelteil mit dem Lagerteil verklebt und/oder verschweißt wird.

28. Verfahren nach einem der Ansprüche 23 bis 27,
**dadurch gekennzeichnet,**
**dass** das mindestens eine Flügelteil in eine zugeordnete Ausnehmung des Lagerteils gelegt wird.

29. Verfahren nach Anspruch 28,
**dadurch gekennzeichnet,**
**dass** Flügelteil und/oder Lagerteil zur Herstellung der Verbindung erhitzt werden.

30. Verfahren nach Anspruch 28 oder 29,
**dadurch gekennzeichnet,**
**dass** das Lagerteil zweiteilig ausgebildet ist und das mindestens eine Flügelteil auf ein erstes Lagerteilelement gelegt wird und anschließend ein zweites Lagerteilelement aufgelegt wird.

31. Verfahren nach einem der Ansprüche 23 bis 30,
**dadurch gekennzeichnet,**
**dass** das Lagerteil mittels eines faserverstärkten Kunststoffmaterials hergestellt wird.

## Claims

1. A butterfly valve for arrangement in a fluid guidance (14) comprising a bearing part (16) for movable support of the butterfly valve and at least one wing part (34, 36), whereby the at least one wing part (34, 36) is manufactured from a fiber-reinforced plastic material with a unidirectional fiber orientation at least layer-by-layer, whereby the bearing part (16) has at least one receptacle (38, 40) in which the respective wing part (34, 36) sits, connected to the bearing part (16), and whereby the at least one wing part (34, 36) is composed of multiple layers.

2. The butterfly valve according to Claim 1,
**characterized in that**
the plastic material is reinforced with long fibers or is reinforced with endless fibers.

3. The butterfly valve according to Claim 1 or 2,
**characterized in that**
the plastic material has a matrix of a thermoplastic material.

4. The butterfly valve according to any one of the preceding claims,
**characterized in that**
the fibers in the at least one wing part (34; 36) are oriented across an axis of rotation (12) of the butterfly valve.

5. The butterfly valve according to any one of Claims 1 to 4,
**characterized in that**
the layers (54, 56) which are spaced a distance apart differ in their fiber orientation.

6. The butterfly valve according to any one of the preceding claims,
**characterized in that**
the at least one wing part (58) has a shape such that it has an increased rigidity based on a surface to which pressure is applied.

7. The butterfly valve according to Claim 6,
**characterized in that**
the at least one wing part (58) has an undulating shape.

8. The butterfly valve according to any one of the preceding claims,
**characterized in that**
the receptacle (38; 40) which is assigned to a wing part (34; 36) is designed so that it can be adhesively bonded and/or welded to the bearing part (16).

9. The butterfly valve according to any one of the preceding claims,
**characterized in that**
the at least one wing part (34; 36) is adhesively bonded and/or welded to the bearing part (16).

10. The butterfly valve according to Claim 9,
**characterized in that**
an adhesive film is arranged between the bearing part (16) and the at least one wing part (34; 36).

11. The butterfly valve according to any one of the preceding claims,
**characterized in that**
the at least one wing part (34; 36) is surrounded by the bearing part (16).

12. The butterfly valve according to any one of the preceding claims,
**characterized in that**
a receptacle (38; 40) assigned to a wing part (34; 36) is provided on the bearing part (16) in such a way that the wing part (34; 36) can be inserted or placed into it.

13. The butterfly valve according to any one of the preceding claims,
**characterized in that**
the at least one wing part (34; 36) is a component that is separate from the bearing part (16) and is connected to the bearing part (16).

14. The butterfly valve according to any one of the preceding claims,
**characterized in that**
the bearing part (16) is designed in at least two parts.

15. The butterfly valve according to Claim 14,
**characterized in that**
a receptacle (38; 40) on the bearing part (16) comprises a first receptacle area, which is formed on a first bearing part element (24) and comprises a second receptacle area which is formed on a second bearing part element (22).

16. The butterfly valve according to any one of the preceding claims,
**characterized in that**
the at least one wing part (34; 36) has an essentially planar surface in the area of the connection to the bearing part (16).

17. The butterfly valve according to any one of the preceding claims,
**characterized in that**
the bearing part (16) is manufactured from a metallic material.

18. The butterfly valve according to any one of Claims 1 to 16,
**characterized in that**
the bearing part (16) is manufactured from a plastic material.

19. The butterfly valve according to Claim 18,
**characterized in that**
the bearing part (16) comprises areas of a long-fiber-reinforced plastic material or an endless-fiber-reinforced plastic material.

20. The butterfly valve according to any one of the preceding claims,
**characterized in that**
the bearing part (16) has teeth (28) for rotationally fixed attachment to a rotating shaft (20).

21. The butterfly valve according to Claim 20,
**characterized in that**
the teeth (28) are manufactured by means of short-fiber-reinforced plastic material.

22. The butterfly valve according to Claim 20 or 21,
**characterized in that**
the teeth (28) are manufactured so they are at least partially self-cutting when the bearing part (16) is placed on the rotating shaft (20).

23. A method for manufacturing a butterfly valve, which has a bearing part and at least one wing part, in which the at least one wing part is manufactured from a fiber-reinforced plastic material and is attached to the bearing part after consolidation, the fibers being aligned unidirectionally at least layer by layer in the plastic material and the at least one wing part (34; 36) being composed of multiple layers.

24. The method according to Claim 23,
**characterized in that**
the at least one wing part is manufactured by means of tapes with a unidirectional fiber direction.

25. The method according to Claim 23 or 24,
**characterized in that**
the fiber-reinforced plastic material is a long-fiber-reinforced plastic material or an endless-fiber-reinforced plastic material.

26. The method according to any one of Claims 23 to 25,
**characterized in that**
the fiber-reinforced plastic material has a matrix of a thermoplastic material.

27. The method according to any one of Claims 23 to 26,
**characterized in that**
the at least one manufactured wing part is adhesively bonded and/or welded to the bearing part.

28. The method according to any one of Claims 23 to 27,
**characterized in that**
the at least one wing part is placed in a respective recess in the bearing part.

29. The method according to Claim 28,
**characterized in that**
the wing part and/or the bearing part is/are heated to establish the bond.

30. The method according to Claim 28 or 29,
**characterized in that**
the bearing part is designed in two parts and the at least one wing part is placed on a first partial bearing element and then a second partial bearing element is placed on that.

31. The method according to any one of Claims 23 to 30,
**characterized in that**
the bearing part is manufactured by means of a fiber-reinforced plastic material.

## Revendications

1. Vanne papillon à disposer dans un dispositif de guidage de fluide (14), comprenant une partie de palier (16) en vue de l'assise mobile de la vanne papillon et au moins une partie d'aile (34 ;36), dans laquelle au moins une partie d'aile (34 ;36) est fabriquée en une matière plastique à fibres renforcées ayant au moins une direction de fibre unidirectionnelle par couches, dans laquelle la partie de palier (16) présente au moins un réceptacle (38 ;40), dans lequel la partie d'aile coordonnée (34 ;36) repose en étant reliée à la partie de palier (16), et dans laquelle au moins une partie d'aile (34 ;36) est constituée de plusieurs couches.

2. Vanne papillon selon la revendication 1,
**caractérisée en ce que**
la matière plastique est renforcée par des fibres longues ou par des fibres continues.

3. Vanne papillon selon la revendication 1 ou 2,
**caractérisée en ce que**
la matière plastique présente une matrice en un matériau thermoplastique.

4. Vanne papillon selon une des revendications précédentes,
**caractérisée en ce que**
les fibres dans au moins une partie d'aile (34 ;36) sont orientées transversalement à un axe de rotation (12) de la vanne papillon.

5. Vanne papillon selon une des revendications 1 à 4,
**caractérisée en ce que**
des couches espacées (54,56) diffèrent en ce qui concerne leur orientation de fibres.

6. Vanne papillon selon une des revendications précédentes,
**caractérisée en ce que**
au moins une partie d'aile (58) a une forme telle qu'elle présente une rigidité accrue par rapport à une surface, sur laquelle une pression est exercée.

7. Vanne papillon selon la revendication 6,
**caractérisée en ce que**
au moins une partie d'aile (58) a une forme ondulée.

8. Vanne papillon selon une des revendications précédentes,
**caractérisée en ce que**
le réceptacle (38 ;40), auquel une partie d'aile (34 ;36) est coordonnée, est configuré de telle sorte qu'il puisse être collé et/ou soudé à la partie de palier (16).

9. Vanne papillon selon une des revendications précédentes,
**caractérisée en ce que**
au moins une partie d'aile (34 ;36) est collée et/ou soudée à la partie de palier (16).

10. Vanne papillon selon la revendication 9,
**caractérisée en ce que**
un film adhésif est disposé entre la partie de palier (16) et au moins une partie d'aile (34 ;36).

11. Vanne papillon selon une des revendications précédentes,
**caractérisée en ce que**
la partie de palier (16) vient en prise autour de au moins une partie d'aile (34 ;36).

12. Vanne papillon selon une des revendications précédentes,
**caractérisée en ce que**
un réceptacle (38 ;40) coordonné à une partie d'aile (34 ;36) sur la partie de palier (16) est configuré de sorte que la partie d'aile (34 ;36) puisse être enfoncée ou placée sur celui-ci.

13. Vanne papillon selon une des revendications précédentes,
**caractérisée en ce que**
au moins une partie d'aile (34 ;36) est un composant séparé de la partie de palier (16), qui est relié à la partie de palier (16).

14. Vanne papillon selon une des revendications précédentes,
**caractérisée en ce que**
la partie de palier (16) est configurée en au moins deux parties.

15. Vanne papillon selon la revendication 14,
**caractérisée en ce que**
un réceptacle (38 ;40) sur la partie de palier (16) comprend une première zone de réceptacle, laquelle est formée sur un premier élément de partie de palier (24), et une deuxième zone de réceptacle, laquelle est formée sur un deuxième élément de partie de palier (22).

16. Vanne papillon selon une des revendications précédentes,
**caractérisée en ce que**
au moins une partie d'aile (34 ;36) présente au niveau de la liaison à la partie de palier (16) une surface essentiellement plate.

17. Vanne papillon selon une des revendications précédentes,
**caractérisée en ce que**
la partie de palier (16) est fabriquée dans un matériau métallique.

18. Vanne papillon selon une des revendications 1 à 16,
**caractérisée en ce que**
la partie de palier (16) est fabriquée dans une matière plastique.

19. Vanne papillon selon la revendication 18,
**caractérisée en ce que**
la partie de palier (16) comprend des zones de matière plastique renforcée par des fibres longues ou par des fibres continues.

20. Vanne papillon selon une des revendications précédentes,
**caractérisée en ce que**
la partie de palier (16) présente une denture (28) en vue de la fixation solidaire en rotation d'un arbre rotatif (20).

21. Vanne papillon selon la revendication 20,
**caractérisée en ce que**
la denture (28) est fabriquée au moyen d'une matière plastique renforcée par des fibres courtes.

22. Vanne papillon selon la revendication 20 ou 21,
**caractérisée en ce que**
la denture (28) est fabriquée de manière à être au moins partiellement autotaraudeuse lorsque la partie de palier (16) est placée sur l'arbre rotatif (20).

23. Procédé de fabrication d'une vanne papillon, laquelle présente une partie de palier et au moins une partie d'aile, dans lequel au moins une partie d'aile est fabriquée dans une matière plastique renforcée par des fibres et est reliée à la partie de palier après la consolidation, dans lequel les fibres dans la matière plastique sont orientée au moins unidirectionnellement par couches et dans lequel au moins une partie d'aile (34 ;36) est constituée de plusieurs couches.

24. Procédé selon la revendication 23,
**caractérisé en ce que**
au moins une partie d'aile est fabriquée au moyen d'un ruban ayant une direction de fibres unidirectionnelle.

25. Procédé selon la revendication 23 ou 24,
**caractérisé en ce que**
la matière plastique renforcée par des fibres est une matière plastique renforcée par des fibres longues ou par des fibres continues.

26. Procédé selon une des revendications 23 à 25,
**caractérisé en ce que**
la matière plastique renforcée par des fibres présente une matrice en un matériau thermoplastique.

27. Procédé selon une des revendications 23 à 26,
**caractérisé en ce que**
au moins une partie d'aile fabriquée est collée et/ou soudée à la partie de palier.

28. Procédé selon une des revendications 23 à 27,
**caractérisé en ce que**
au moins une partie d'aile est insérée dans une cavité coordonnée de la partie de palier.

29. Procédé selon la revendication 28,
**caractérisé en ce que** la partie d'aile et/ou la partie de palier sont chauffées afin de fabriquer la liaison.

30. Procédé selon la revendication 28 ou 29,
**caractérisé en ce que**
la partie de palier est réalisée en deux parties et au moins une partie d'aile est placée sur un premier élément de partie de palier et ensuite sur un deuxième élément de partie de palier.

31. Procédé selon une des revendications 23 à 30,
**caractérisé en ce que**
la partie de palier est fabriquée au moyen d'une matière plastique renforcée par des fibres.
